(19) Europäisches Patentamt
European Patent Office
Office européen des brevets

(11) Numéro de publication : **0 021 033**
**B2**

(12) # NOUVEAU FASCICULE DE BREVET EUROPÉEN

(45) Date de publication du nouveau fascicule du brevet : **21.10.87**

(51) Int. Cl.[4] : **C 07 F 7/22**, C 08 K 5/57, C 08 L 27/04

(21) Numéro de dépôt : **80102794.7**

(22) Date de dépôt : **20.05.80**

(54) **Compositions stabilisatrices contenant des composés monoorgano tris-thioalkyl étain et leur application à la stabilisation de polymères halogéno-vinyliques.**

(30) Priorité : **23.05.79 FR 7913109**

(43) Date de publication de la demande :
**07.01.81 Bulletin 81/01**

(45) Mention de la délivrance du brevet :
**16.02.83 Bulletin 83/07**

(45) Mention de la décision concernant l'opposition :
**21.10.87 Bulletin 87/43**

(84) Etats contractants désignés :
**BE CH DE GB IT LI NL**

(56) Documents cités :
**EP-A- 0 000 746**
**EP-A- 0 010 008**
**FR-A- 2 285 392**
**FR-A- 2 306 208**
**US-A- 2 883 363**
**US-A- 3 507 827**
**P. KLIMSCH et al., Plaste und Kautschuk, 16(74), 242-251**
**Le dossier contient des informations techniques présentées postérieurement au dépôt de la demande et ne figurant pas dans le présent fascicule.**

(73) Titulaire : **SOCIETE NATIONALE ELF AQUITAINE**
**Tour Aquitaine**
**F-92400 Courbevoie (FR)**

(72) Inventeur : **Foure, Michel, Ing.**
**Route Nationale 117**
**F-64170 Artix (FR)**

(74) Mandataire : **Bühling, Gerhard, Dipl.-Chem.**
**Patentanwaltsbüro Tiedtke-Bühling-Kinne Grupe-Pellmann-Grams-Struif Bavariaring 4**
**D-8000 München 2 (DE)**

**EP 0 021 033 B2**

**Description**

La présente invention concerne des compositions de stabilisants organostanniques pour résines halogéno-vinyliques.

« Du document FR-A-23 06 208, page 17, lignes 10 à 18, des composés organostanniques de la forme $(R_2)SnX_2$ sont connus, dans laquelle le reste X, inter alia, représente le groupe $—S—(CH_2)_nOCO$ alcoyle, n étant 1 ou 2. En outre, le document FR-A-23 06 208 décrit des composés de la forme $RSnX_3$, dans laquelle X peut avoir la signification sus-mentionnée, qui forme un produit complexe avec le dérivé disubstitué correspondant. Comme seul composé concret du type mono organo tris thioalkyle étain, le composé de la forme MeOCO $(CH_2)_2Sn(SCH_2COO$ iso-$C_8H_{17})_3$ est mentionné à la page 14. Ce composé est utilisé pour stabiliser du chlorure de polyvinyle.

Dans le document EP-A-746, dans les revendications 1, 4 et 5 des composés des formes $A_2SnR_2{}^5$ et $ASnR_3{}^5$ sont décrits, dans lesquelles $R^5$ représente $—S—(CH_2)_m—CO_2$ alkyle. Les composés sus-mentionnés sont utilisés comme mixture pour stabiliser des polymères halogénés.

Dans le document FR-A-22 85 392, des composés organostanniques de la forme $RSnX_3$ sont décrits, dans laquelle $X_3$ inter alia représente $—S(CH_2)_nCOO$ alcoyle et n = 1 ou 2. Dans l'exemple 12, le composé $CH_3OCO(CH_2)_2Sn(SCH_2COOC_8H_{17})_3$ est mentionné. Ces composés doivent être des stabilisants excellents pour le chlorure de polyvinyle, leur effet stabilisant étant le même ou meilleur que celui des composés butylstanniques connus conventionnels.

Dans le document US-A-28 83 363 des composés organostanniques des formes $(R_3Sn)_2X$, $R_2SnX$ et $(RSn)_2X_3$ sont connus dans lesquelles R représente un reste d'alkyle et X représente le reste d'un diester d'un alcool mercapto avec 2 à 4 atomes de carbone avec un diacide de carbone aliphatique saturé, tous les atomes de soufre de l'alcool de mercapto étant alliés avec l'étain. Ces composés organostanniques connus sont utilisés aussi à la stabilisation des résines à base du chlorure vinyle.

Dans le document US-A-35 07 827 le composé (isooctylmercaptoacétate) du di n-butyl étain est connu. Ce composé connu produit aussi un effet stabilisant dans les résines à base du chlorure de polyvinyle.

La revue Plaste und Kautschuck, 16ème année, volume 4, pages 242 à 251 (1969), décrit des effets de synergie dans la stabilisation de PVC avec des composés organostanniques. D'après ce document il est connu qu'il y a un effet de synergie par la combinaison de composés organostanniques relativement peu efficaces ne contenant pas de soufre avec de tels composés soufrés, ce qui peut améliorer l'efficacité stabilisante déjà bonne des mercaptides organostanniques. Aussi par la combinaison du sulfure dibutyl étain avec bis(isooctylmercaptoacétate) de di n-butyl étain, un stabilisant peut être obtenu qui, en plus d'une bonne stabilisation à long terme, provoque également une très bonne couleur initiale. En outre, des systèmes avec des composés organostanniques de grades différents d'alkylation ont été examinés, où l'on a constaté que l'effet stabilisant de composés organostanniques est déterminé principalement par les restes d'acide alliés à l'étain tandis que l'influence des groupes alkyl ou bien aryl est relativement petite. En outre, il est constaté que l'effet stabilisant des composés monoorganostanniques augmente un peu par combinaison avec des composés diorganostanniques, tandis qu'il diminue nettement par combinaison avec des composés triorganostanniques, de manière qu'en pratique, on a utilisé principalement des composés diorganostanniques comme stabilisants. »

L'objet de l'invention est donc la production de compositions de stabilisants organostanniques, qui permettent de réduire de manière plus efficace la coloration des résines halogéno-vinyliques pendant le chauffage sans nuire au contrôle de la viscosité.

La composition de stabilisants pour des polymères halogénovinyliques en particulier pour le chlorure de vinyle, contenant des composés dialkyl étain et particulièrement du bis(iso-octyl-mercaptoacétate) de di n-butyl étain est caractérisée en ce qu'elle contient en outre des composés mono organo tris thioalkyl étain de formule générale (1)

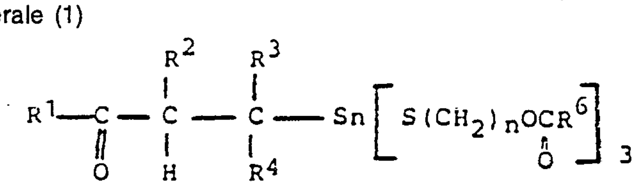

(1)

dans laquelle $R^2$, $R^3$, $R^4$ représentent de l'hydrogène ou un reste hydrocarboné alkylé contenant de 1 à 3 atomes de carbone ; $R^1$ représente un groupement alkyle, un hydroxyle, un groupement hydrocarbure contenant de l'oxygène, les trois groupements

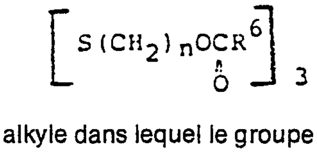

sont le reste d'un ester de mercapto alkyle dans lequel le groupe mercapto se trouve dans le reste d'alcool

de l'ester et le groupement $R^6$ appartient à un monoacide aliphatique contenant de 13 à 18 atomes de carbone, n étant égal à 2-3-4. Le groupement

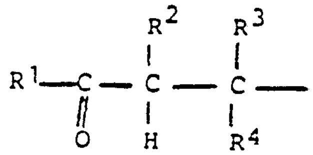

est le reste d'un composé oléfinique par exemple l'acrylate de méthyle, d'éthyle, d'hexyle, l'acide acrylique, la vinyl méthyl cétone, le crotonate de méthyle. Les monoacides aliphatiques dérivent des acides gras, notamment myristique, palmitique, stéarique isostéarique, ou des mélanges de tels acides.

Ces composés organostanniques de la formule (1) sont obtenus par l'action des trihalogénures organostanniques de la formule

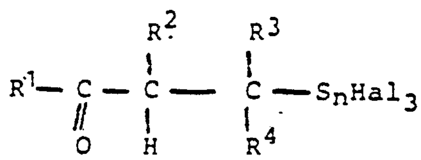

sur des esters de mercaptoalkyles de la formule

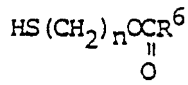

c'est-à-dire des esters dans lesquels le groupe mercapto se trouve dans le reste alcool de l'ester et non pas dans le reste acide comme c'est le cas de certains produits décrits dans l'art antérieur. Il est surprenant de constater que grâce à cette différence de position du —SH, l'activité des esters organostanniques procurent une efficacité remarquable. A cela s'ajoutent les avantages de la facilité de préparation et de purification de ces corps.

Les trihalogénures stanniques eux-mêmes peuvent être obtenus soit d'après le procédé décrit dans le brevet français 2.285.392, soit et de préférence par l'action d'un composé stanneux sur un excès d'un composé oléfinique de formule

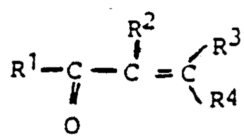

dans laquelle $R^1$, $R^2$, $R^3$ et $R^4$ ont la signification indiquée ci-dessus, en présence d'un hydracide, le milieu étant exempt de solvant.

Les composés mono organo tris thioalkyl étain donnent d'excellents résultats en association avec les dialkyl étain tels que par exemple les bis(isooctylmercaptoacétate) de di n-butyl étain $Bu_2Sn$ $(SCH_2CO_2i \cdot C_8H_{17})_2$ dans les proportions variant entre 5 et 95 % de monoalkyl étain pour 95 à 5 % de dialkyl étain. Les compositions permettent de réduire la coloration des résines halogéno-vinyliques pendant le chauffage sans nuire au contrôle de la viscosité.

Les résines renfermant un halogène, auxquelles s'applique l'invention, peuvent être des homopolymères, comme par exemple chlorure de polyvinyle, chlorure de polyvinylidène, polychlorotrifluoroéthylène, polytétra-fluoroéthylène, polychloro-éther, polydichlorostyrène, des copolymères tels que acétochlorure de polyvinyle ou autres, ou bien des combinaisons ou mélanges divers, par exemple des chlorures de polyvinyle modifiés par de l'éthylène ou/et du propylène, par de l'acrylonitrile-butadiène-styrène, de l'éthylène-acétate de vinyle et similaires.

Les stabilisants peuvent être incorporés à la résine après la polymérisation, mais avant le séchage du polymère, ou bien au moment de la mise en œuvre de celui-ci ; leur proportion peut varier entre de larges limites en particulier de 0,1 à 5 % du poids de la résine, et surtout entre 0,2 et 2 %.

L'invention est illustrée non limitativement par les exemples qui suivent :

## Exemple 1

Préparation des composés de la formule (1).

Préparation du (Méthoxy-carbonyl-3-éthyl)-tris(palmitoyloxy-2-éthylthio) étain.

Un ballon de 500 ml muni d'un agitateur, d'un thermomètre est placé dans un bain chauffant ; on introduit dans le ballon 7,8 g (0,025 mole) de $Cl_3SnCH_2COOCH_3$, 23,7 g (0,075 mole) de palmitate de mercapto éthyle et 300 ml d'hexane sec. On chauffe jusqu'à dissolution complète des produits, puis on laisse revenir la température à 40 °C. On ajoute alors goutte à goutte 7,6 g (0,075 mole) de triéthylamine, puis on chauffe trois heures à 40 °C. On filtre le précipité de chlorhydrate de triéthylamine ; dans le filtrat refroidi, 18,5 g d'un solide blanc cristallise ; il est analysé et il est caractérisé comme étant $CH_3OCOCH_2CH_2Sn\ (SCH_2CH_2OCOC_{15}H_{31})_3$

Analyse $C_{58}H_{112}O_8S_3Sn$ : 1 151
Calculé : C 60,47 % ; H 9,73 % ; S 8,34 % ; Cl O
Trouvé : C 60,89 % ; H 9,91 % ; S 8,32 % ; Cl O
Des eaux mères on récupère une quantité supplémentaire (5,1 g) de produit recherché.

Exemple 2

Préparation du (méthoxy-carbonyl-3 éthyl)-tris(myristoyl-oxy-2 éthyl-thio)-étain.

Dans un ballon de 1 litre placé dans un bain chauffant et muni d'un agitateur, d'un thermomètre et d'une ampoule à brome, on introduit 21,8 g (0,07 mole) de (trichloro)-(méthoxy-carbonyl-3 éthyl)-étain, 61 g (0,21 mole) de myristate de mercapto éthyle et 450 ml d'hexane sec. On chauffe jusqu'à dissolution complète, et on laisse la température revenir à 40 °C, et on ajoute goutte à goutte 21,3 g (0,21 mole) de triéthylamine dissoute dans 50 ml d'hexane ; on chauffe 3 heures à 40 °C. On filtre 29 g (soit 100 % de la quantité théorique) de chlorhydrate de tris-éthylamine formé. On refroidit le filtrat à 0 °C. On filtre et obtient 63,2 g de solide blanc qui cristallise. Ce produit est caractérisé comme ayant la formule

$$CH_3OCOCH_2CH_2Sn(S(CH_2)_2OCOC_{13}H_{27})_3$$

Analyse $C_{52}H_{100}O_8S_3Sn$ : 1 067
Calculé : C 58,48 % ; H 9,37 % ; S 9,00 %
Trouvé : C 58,46 % ; H 9,58 % ; S 9,04 %

Exemple 3

Préparation du (méthoxy-carbonyl-3 éthyl)-tris(stéaroyl-oxy-2 éthyl-thio)-étain.

Le mode opératoire est identique à celui qui est décrit dans l'exemple 2. On introduit dans le ballon 15,6 g (0,05 mole) de $Cl_3SnCH_2CH_2CO_2CH_3$ et 51,6 g (0,15 mole de stéarate de mercapto éthyle. On obtient à la fin du traitement 47,5 g soit avec un rendement de 77 % un solide blanc dont le point de fusion est 57 °C. Ce produit est caractérisé par spectroscopie comme étant le produit recherché : $CH_3OCOCH_2CH_2Sn\ (SCH_2CH_2OCOC_{17}H_{35})_3$.

Exemple 4

Effet stabilisant d'une formation constituée par un stabilisant de la formule (1) (stabilisant B) associé avec un dialkyl étain (stabilisant C).

Dans cet exemple des échantillons de polychlorure de vinyle, stabilisé avec les compositions données dans le tableau 1 sont soumis à des essais de coloration au chauffage. Pour cela on malaxe à 185 °C sur un mélangeur à rouleaux. Une formulation comprenant :

| | |
|---|---|
| Chlorure de polyvinyle connu sous la dénomination commerciale LACOVYL S 071 S de coefficient de viscosité K = 56 | 100 parties en poids |
| Stabilisant B | 0,1 partie en poids |
| Stabilisant C | 0,2 partie en poids |
| Cire « E » (qui constitue le lubrifiant externe) | 0,5 partie en poids |

Des stabilisants de la formule (1) avec $R^6 = C_{13}$, $C_{15}$, $C_{17}$ sont essayés conjointement avec du bis(isooctylmercaptoacétate) de di n-butyl étain.

Les résultats en fonction de la nature du radical $R^6$ sont données dans le tableau I suivant et comparés avec une formulation qui ne comprendrait que le stabilisant C.

(Voir Tableau I page 5)

Tableau I

| Formulation | | Apparition de la couleur (temps en mn) | | |
|---|---|---|---|---|
| | | Jaune très clair | Jaune | Brun (décomposition) |
| C : 0,3 p (référence) | 1 | 2 | 3-4 | 12 |
| B : 0,1 p + C 0,2 p (B : $R^6 = C_{17}H_{35}$) | 2 | 3-4 | 7-8 | 18 |
| B : 0,1 p + C 0,2 p (B : $R^6 = C_{15}H_{31}$) | 3 | 5-6 | 8-9 | 22 |
| B : 0,1 p + C 0,2 p (B : $R^6 = C_{13}H_{27}$) | 4 | 4-5 | 7-8 | 25 |

Il ressort de ce tableau que les formulations 2-3-4 ont un effet de synergie par rapport à la formulation 1, tant au point de vue de la couleur initiale que de la stabilité à long terme.

Exemple 5

Cet exemple rend compte de l'effet favorable des formulations 2-3-4 de l'exemple 4, sur la viscosité du chlorure de polyvinyle. Les déterminations relatées sont effectuées au moyen de l'appareil Brabender permettant d'enregistrer l'évolution dans le temps du couple de malaxage de la résine à une température donnée.

La formulation utilisée est la suivante :

| | |
|---|---|
| Chlorure de polyvinyle | 100 parties en poids |
| $CaCO_3$ | 3 parties en poids |
| $TiO_2$ | 1 partie en poids |
| Cire « E » | 0,8 partie en poids |
| Système stabilisant | |
| $BuSn(SCH_2CO_2C_8H_{17})_2$ | 0,75 partie en poids |
| $CH_3OCO(CH_2)_2Sn(S(CH_2)_2OCOC_{15}H_{31})_3$ | 0,72 partie en poids. |

On opère à 200 °C avec une vitesse de rotation du rotor du malaxeur de 60 t/min.
Les courbes obtenues indiquent un palier d'environ 16 minutes avec un couple de 1,6 m · kg.

**Revendications**

1. Composition de stabilisants pour des polymères halogénovinyliques en particulier pour le chlorure de vinyle, contenant des composés dialkyl étain et particulièrement du bis(isooctyl-mercaptoacétate) de di n-butyl étain caractérisée en ce que la composition contient en outre des composés mono organo tris thioalkyl étain de formule générale (1)

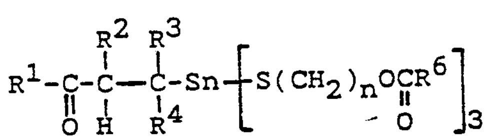 (1)

dans laquelle $R^2$, $R^3$, $R^4$ représentent de l'hydrogène ou un reste hydrocarboné alkylé contenant de 1 à 3 atomes de carbone ; $R^1$ représente un groupement alkyle, un hydroxyle, un groupement hydrocarbure contenant de l'oxygène, les trois groupements

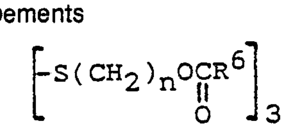

sont le reste d'un ester de mercapto alkyle dans lequel le groupe mercapto se trouve dans le reste d'alcool de l'ester et le groupement $R^6$ appartient à un mono acide aliphatique contenant de 13 à 18 atomes de carbone, n étant égal à 2-3-4.

2. Application des compositions suivant la revendication 1 à la stabilisation des polymères

halogénovinyliques, en particulier le polychlorure de vinyle, caractérisée en ce qu'elle est réalisée selon la revendication 1.

## Claims

1. Stabilizer composition for halovinyl polymers, particularly for polyvinyl chloride, said composition containing dialkyltin compounds, particularly di-n-butyltinbis(isooctylmercaptoacetate), characterized in that the composition further contains monoorganotris(alkylthio) tin compounds of the general formula (1) :

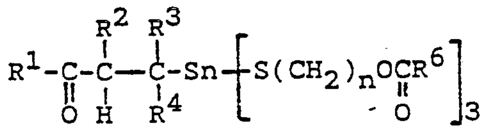
(1)

wherein $R^2$, $R^3$ and $R^4$ represent hydrogen or an alkyl hydrocarbon radical containing from 1 to 3 carbon atoms, $R^1$ represents an alkyl radical, a hydroxyl group or an oxygen-containing hydrocarbon grouping, and the three groupings

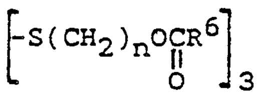

are the radicals of a mercapto alkyl ester, the mercapto group being in the alcohol radical of the ester, wherein the grouping $R^6$ belongs to an aliphatic monoacid containing from 13 to 18 carbon atoms, and n equals 2, 3 or 4.

2. Use of the compositions according to claim 1 for stabilizing halovinyl polymers, particularly polyvinyl chloride, characterized in that it is realized in conformity with claim 1.

## Patentansprüche

1. Stabilisatormischung für Halogenvinylpolymere, insbesondere für Polyvinylchlorid, enthaltend Dialkylzinnverbindungen und insbesondere Di-n-butylzinnbis(isooctylmercaptoacetat), dadurch gekennzeichnet, daß die Mischung ferner Monoorganotris(alkylthio) zinnverbindungen der allgemeinen Formel (1) enthält :

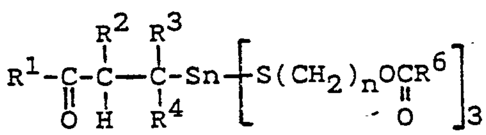
(1)

worin $R^2$, $R^3$ und $R^4$ jeweils Wasserstoff oder einen 1 bis 3 Kohlenstoffatome enthaltenden Alkylkohlenwasserstoffrest bedeuten, $R^1$ eine Alkylgruppe, eine Hydroxylgruppe oder eine sauerstoffhaltige Kohlenwasserstoffgruppierung bedeutet und die drei Gruppierungen

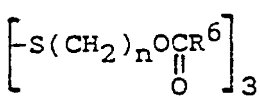

die Reste eines Mercaptoalkylesters sind, worin sich die Mercaptogruppe im Alkoholrest des Esters befindet, wobei die Gruppierung $R^6$ zu einer 13 bis 18 Kohlenstoffatome enthaltenden einbasigen aliphatischen Säure gehört und n 2, 3 oder 4 bedeutet.

2. Verwendung der Mischungen nach Anspruch 1 zum Stabilisieren von Halogenvinylpolymeren, insbesondere von Polyvinylchlorid, dadurch gekennzeichnet, daß sie gemäß Anspruch 1 durchgeführt wird.